# EUROPEAN PATENT APPLICATION

(11) **EP 2 065 076 A1**
(43) Date of publication of application: **03.06.2009**
(21) Application number: 07788554.9
(22) Date of filing: 25.05.2007
(51) Int. Cl.: A62C 2/16, A62C 3/02, B32B 5/24

(54) **MULTILAYER FIRE-BARRIER CANVASES**

(30) Priority: 31.05.2006 ES 200601499
(71) Applicant: Ortiz Teruel, Valentin, 29004 Malaga (ES)
(72) Inventor: Ortiz Teruel, Valentin, 29004 Malaga (ES)
(74) Representative: Carpintero Lopez, Francisco
(86) International application number: PCT/ES2007/000306
(87) International publication number: WO 2007/138132

(57) **Abstract**

Canvasses for controlling forest fires and prescribed burning and for protecting persons and property, comprising at least one reflective metal sheet accompanied for the protection and thermal insulation thereof by at least one layer of cloth or felt of artificial mineral fibres, metal fabrics and/or mineral-based sheets of paper, all such layers and sheets being joined by mechanical means, principally sewing with metal thread. Such canvases retain the consistency of flexible fabric and may be employed portably or as fixed installations, whether in a permanent or temporary manner.

## Description

Multilayered fire-retardant canvasses comprised of one or more reflective metal sheets which are impervious to the gases that combine, for their reinforcement and thermal insulation, with one or more layers of artificial mineral fibre fabric or felt, mineral-based paper sheets and/or metal fabrics, all of which are mechanically joined together, applicable to the control and extinction of forest fires and prescribed burning in forest or agricultural areas and to the protection of persons and assets.

### SECTOR OF THE INVENTION

Extinction and prevention of forest fires.

### STATE OF THE ART: BACKGROUND OF THE INVENTION

Usual forest fire control techniques are fundamentally based on the removal of fuel, by creating fire lines or firebreak areas, and the application of water, with or without added retardant products, for the purpose of consuming heat in its evaporation. The removal of oxygen using mechanical means, beating out the flames or applying fire-extinguishing pumps are used to a lesser extent. Backfires are applied exceptionally, using the fire to fight the fire.

In the extinction of forest fires there are references to the use of fire barriers, although only at invention level, without having achieved their practical application to date. We can refer to Renoux's invention, FR2620344, which consists of placing rigid panels comprised of grilles in a vertical position and comprised of refractory materials and aluminium sheets. This system is not effective in forest fires as it is impossible to adapt to irregular terrain. Mech-Tool's invention, GB2276543m consists of a protective shield against heat radiation, basically comprised of two metal and rigid sheets, and is applicable in industrial or urban facilities, not being applicable to forest fires as in the prior case due to its rigidity and weight. Dutroy's invention, FR924016, consists of the use of unrollable mesh or metal fabrics which, on not impeding the passage of heat radiation, are not effective. These four inventions have the difficulty of transport and installation in irregular terrains with pronounced relief and the presence of vegetation. Puente, in ES2124134, establishes vertical barriers comprised of nonflammable, flexible sheets which allow the passage of air and therefore do not impede heat transmission by convection or radiation, as they do not offer reflective properties, due to which they are not useful in a forest fire. Morgado, in ES1048262U, offers curtains made of fireproof materials, without specifying their nature or making reference to reflective properties. Plantefeve, in inventions FR2657265 and FR2677548, offers different ways of deploying curtains or screens on fixed infrastructures, without specifying the nature of the fabrics used, with the sole condition of being fireproof. Tonchia, in FR2863895 and FR2806636, also establishes curtain deployment systems in fixed facilities without specifying their nature and affirming that they can even be translucent, due to which they do not impede heat radiation. Chuprin, in US2005161235, discloses vertical screens comprised of fire-resistant materials without specifying the nature of said materials or mentioning any reflective properties. Schneider, in US3635290, offers sails which are raised by the action of the wind or using balloons without describing the nature of said sails, and which have the problem of losing their grip in the absence of wind or with gusts of wind or parallel wind. Leprevost, in FR1009783, considers a vertical curtain deployment system without specifying its nature. Jaquement, in FR561289, also merely offers a fixed curtain deployment system without further specifications. Finally, Valette, in FR2204973, discloses fireproof membranes anchored to the ground and raised with coverings in the manner of a hot-air balloon, establishing the sole condition of being fireproof.

In summary, the aforementioned inventions related to the establishment of physical barriers against forest fires relate to deployment or installation systems, in many cases impossible to use in a forest fire due to their lack of adaptability to irregular terrains, or are based on screens or similar elements without defining their constituent materials or when they do so result inadequate or insufficient. This invention aims to resolve the aforementioned inconveniences in order to achieve a product applicable to the reality of forest fires.

### DESCRIPTION OF THE INVENTION

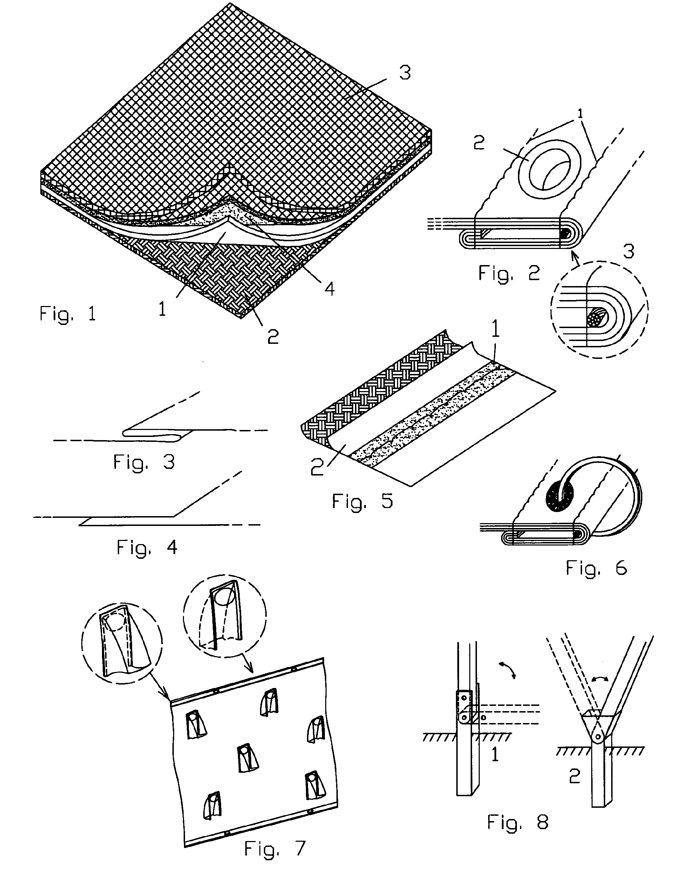

The invention consists of canvasses comprised of one or more layers of malleable mesh and with heat radiation reflection properties, as a main component, accompanied by one or more layers of artificial mineral fibre fabric or felt, mineral-based paper sheets and/or metal fabrics, for the purpose of protecting it against strain or tension and provide insulation against very high temperatures (fig. 1). The main reflective layers and the secondary protection layers are joined together by means of mechanical joints, although thermostable adhesive substances may be used in an auxiliary manner. By means of these combinations of layers a heat barrier is effectively achieved with the necessary conditions of being impervious to hot gases, although in certain cases wind pressure dissipaters may be added, and reflecting heat radiation. These two fundamental properties as a fire barrier are conferred by the main metal and reflective layer. Additionally, a perfect adaptation to any type of terrain is ensured, as it maintains the consistency of flexible fabric. These canvasses may be dyed using fireproof inks or even fluorescent substances in cases where their presence must be highlighted as indicators of water unloading areas by aerial means, or the opposite case, when their presence must be concealed to avoid impacting on the landscape in the case of permanent use. In cases where the canvasses have a layer of fibre fabric, it may be impregnated with combustion-retarding products classified as long-term, such as ammonium salts. The canvasses may be installed on fixed facilities, whether permanent or temporary, or in a portable manner in any location, even as a line of support in firebreaks.

The reflective and flexible metal sheet (fig. 1.1) is the fundamental element to achieve the desired effect, as it represents imperviousness to gases and heat reflection in itself. The material used shall preferably be aluminium or aluminium alloy paper with a reflective capacity of more than 95% of the heat radiation received and a recommended thickness of more than 30 µm. This or these sheets are preferably disposed on the central part of the combination of layers or on the side not directly exposed to the fire, and protected by the rest of the layers, for the purpose of providing thermal insulation to avoid being subjected to a temperature higher than the range 600ºC to 900ºC. The sheets may be reinforced by means of artificial mineral fibres embedded in their interior at the time of manufacture.

The artificial mineral fibre fabric (fig. 1.2) has the mission of conferring to the assembly a high resistance to the physical phenomena of traction, abrasion, puncture and tear, protecting the reflective metal layers, which are much weaker, and thermally insulating them. In short, they have a resistant and insulating function. The mineral fibre threads may be reinforced with metal threads in order to increase their mechanical resistance. Mineral fibre felt may also be used when the physical resistance requirements are lower. The material used shall preferably be silica, carbon or glass fabric with a minimum recommended weight of 400 g/m², although when this fabric is not directly exposed to fire the weight may be reduced to 200 g/m². The fabric may be subject to special treatments such as mineralisation, caramelisation or aluminium spraying (of the alufix type) and also allow their impregnation with long-term retardant products, such as the ammonium salts. These fabrics, according to their nature and the treatment they receive, resist exposure to very high temperatures for a sufficient length of time to be usable in a forest fire, and may also be reused.

The metal fabrics (fig. 1.3) may be used to substitute the mineral fibre fabric layers or as a complement to these. Their mission is to resist and dissipate the heat received by conduction. Threads made of aluminium, steel or other ductile metals and their alloys may be used, with a recommended weight of less than 500 g/m².

The mineral-based paper layers (fig. 1.4) are used to reinforce the heat insulating properties of the whole assembly and especially of the mineral fibre fabric or felt in their mission to protect the reflective metal sheets. Primarily phlogophyte mica paper sheets may be used. A weight of less than 200 g/m² is recommended.

The joint of the different layers that comprise the canvas shall be carried out mechanically, preferably by means of sewing with metal thread (fig. 2.1) or similar systems, such as stapling or riveting. These joints may be complemented by the application of thermostable adhesive substances, particularly in joints to expedite the manufacturing process, although its use is not recommended due to its high degradability at very high temperatures and the loss of flexibility that these could cause. Given the difference in stability of the layers used, folding (fig. 3) or overlapping (fig. 4) is required in the reflective metal sheets and in the mineral paper sheets between two lines or joining points to avoid the breaking thereof on subjecting the multilayered canvas to traction. Additionally, for the purpose of counteracting the weakness produced in the metal sheets by the orifices made in the joints, the seam lines or joining points may be reinforced (fig. 5) with mineral fibre fabric adhesive tapes and thermostable adhesive (fig. 5.1), in such a manner that the traction strain is supported by said tape rather than by the reflective metal sheets (fig. 5.2) themselves. The canvas layer assembly shall preferably be sewn perimetrally with a double seam over a fold that hides the edges of the layers, particularly those of the fabric, to avoid fraying and fibre emission (fig. 2.1). Riveted metal rings (fig. 2.2) or metal rings or snaps placed through buttonholes (fig. 6) or similar elements are inserted between the two sewing lines and as a complement to its anchorage at the application site.

A 2 mm diameter braided steel wire cable (fig. 2.3) may be inserted in the edge of the canvas and fastened by a seam, stapling or riveting line, for the purpose of conferring greater resistance to the fixations and confer greater consistency to the assembly, particularly in canvas tightening operations.

In order to reduce the effect of the wind on the canvasses once installed, pressure dissipaters that consist basically of orifices, preferably circular, connected to sleeves that direct the wind downwards (fig. 7) may be used. In this manner, the effect of the wind pressure is reduced while preventing the flame from passing though said dissipaters due to their tendency to ascend by convection.

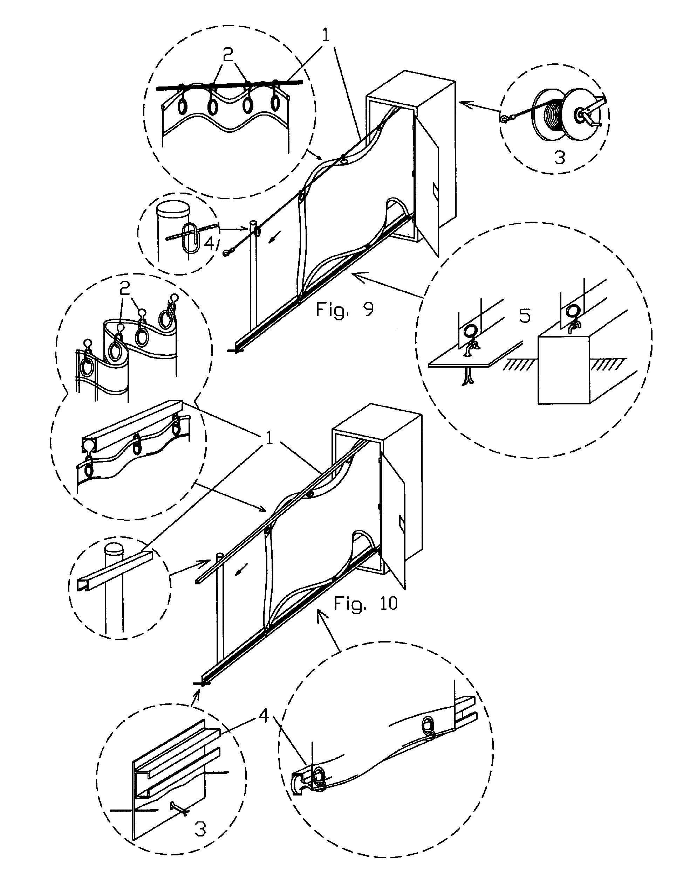

In the case that the canvasses are installed on fixed infrastructures comprised of posts, these may be fully (fig. 8.1) or partially folded up to a certain degree of tilt (fig. 8.2), for the purpose in the latter case of reducing the effect of wind pressure. The canvasses may be deployed from fixed stations or cabinets (fig. 9 and 10) as storage elements, through cables (fig. 9.1) or guides (fig. 10.1 and 10.4) resting on posts, using rings or snaps (fig. 9.2) or guide elements (fig. 10.2) in the manner of preventive fire breaks. In cases where these are supported by cables, these may be fixed or extensible. In the latter case, they may be unrolled from the stations or cabinets by means of a rotating element (fig. 9.3) and disposed on the posts through open rings or snaps joined to said posts (fig. 9.4), in such a manner that the cable may be unhooked to allow the passage of the canvas. In any case, the canvasses must be inserted in its lower edge on structures anchored to the ground in such a manner as to ensure the discontinuity of the vegetal fuel (fig. 9.5 and fig. 10.3).

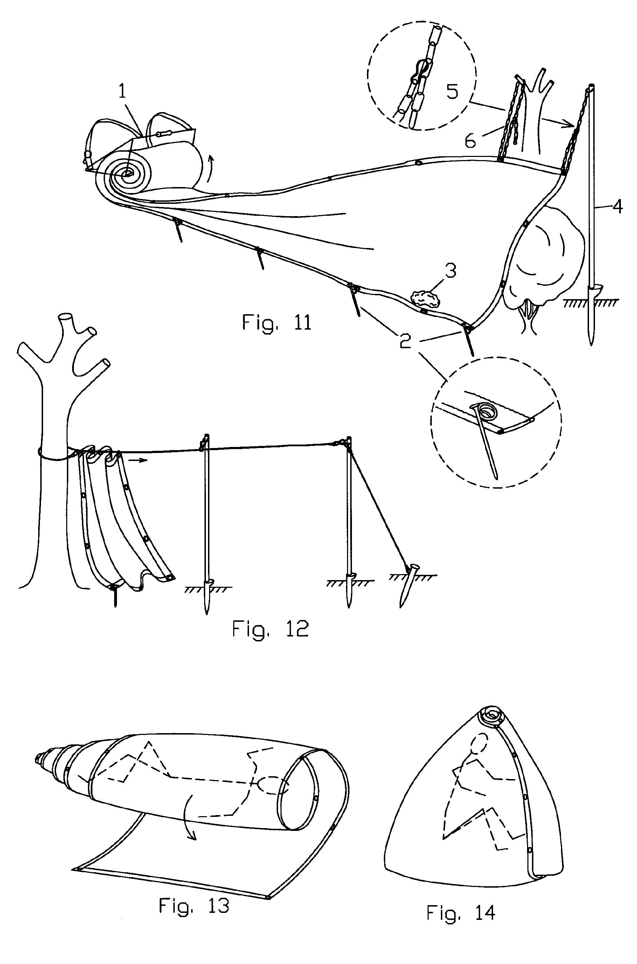

The canvasses described herein may be used in a portable manner, for their employment in any place where these may be required (fig. 11). In this case they are rolled, folded longitudinally or not, over a structure with a rotating shaft that serves to store, transport, install and remove them (fig. 11.1). The canvasses are accompanied by metal stakes in the rings or similar elements of the lower edge (fig. 11.2), for their anchorage to the ground, although local stones may also be used (fig. 11.3) deposited on said edge. They are also accompanied by aluminium or artificial mineral fibre posts, with a spike at the lower end for driving into the ground (fig. 11.4). These posts have a chain with a hook or snap disposed on their upper end for the purpose of fixing and tightening the canvas using the chain links (fig. 11.5). Similarly, when elements on which to hook and tense the canvas exist in the application site, chains with hooks or snaps on the two ends (fig. 11.6) are used. Annunciator wires fixed to the posts or other elements of the site may be used, to which they are hooked and guided through the rings or snaps (fig. 12). The canvasses may rest on the existing vegetation. For this portable use, the canvasses shall be manufactured in sections, in such a manner that each unit does not exceed 25 kg of weight, for the purpose of being easily transported and handled by a person, thereby resulting in lengths of 10 to 20 m for canvas widths of 1 to 2 m, approximately.

These canvasses may be used if required for personal protection, as the personnel fighting the fire may completely wrap themselves in these, mainly by rolling the canvas around their body by way of a survival cell (fig. 13 and fig. 14). Similarly, material assets or fire extinction equipment can be protected in this manner.

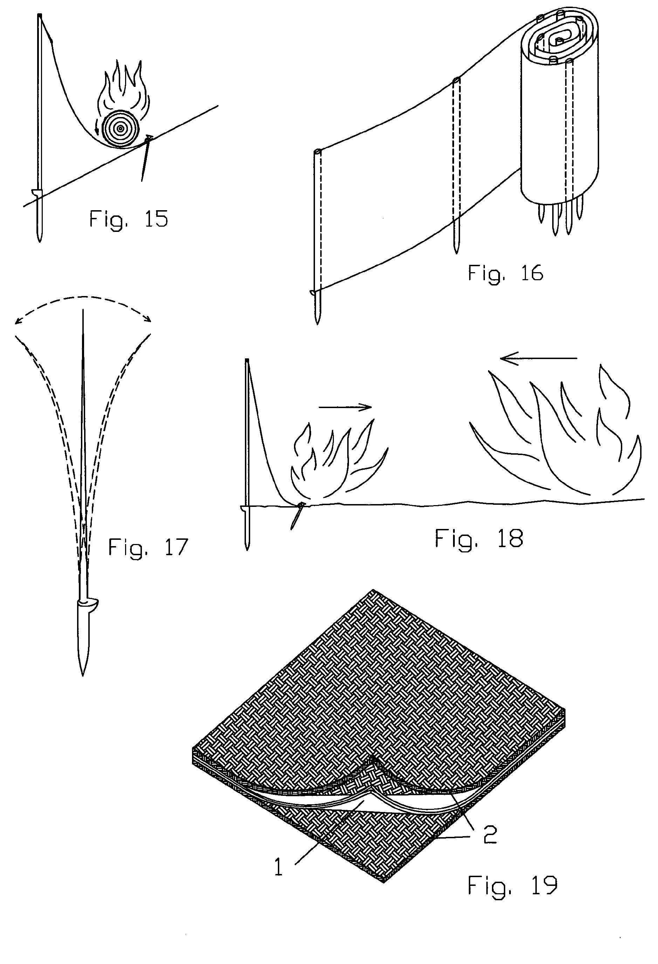

The canvasses, given their resistant characteristics, may be used as barriers for the containment of rolling materials in flames when the fire spreads over sloping terrains (fig. 15).

The canvasses may have aluminium or artificial mineral fibre posts permanently inserted with metal spikes disposed on the lower end for driving into the ground (fig. 16). The canvasses manufactured in this manner are presented in a rolled or folded format.

The canvasses may also be supported by fibre posts, preferably inserted in a permanent manner, the diameter of which decreases with height and sufficiently flexible to be partially thrown down by the wind and dissipate the pressure without losing their position (fig. 17).

Finally, the canvasses may be used as a line of support in the creation of firebreaks, in such a manner that said fire line does not advance in the opposite direction to that desired, on finding the fire caused by the personnel in charge of its extinction with the fire barrier effect of the canvasses (fig. 18).

### DESCRIPTION OF A PREFERRED EMBODIMENT

Multilayered fire-retardant canvas comprised of two main layers of pure aluminium 50 µm thick (fig. 19.1), with reflective surfaces, disposed between two layers of 600 g/m² silica fibre fabric (fig. 19.2), the four layers being sewn together with metal thread (fig. 2.1). The dimensions of the canvas are variable in length and width. The reflective aluminium sheets have sufficient folds between two seam lines to offset their lack of elasticity with respect to the silica fibre fabric (fig. 3). The canvas has a 2 mm diameter steel wire cable along its perimeter inserted in the outer fold of the set of layers and fixed by the outer perimeter seam line (fig. 2.3). Riveted metal rings are disposed on the perimeter fold and between two seam lines to facilitate their anchorage (fig. 2.2). Light metal alloy stakes 25 cm in length are disposed on the over rings of the lower edge of the canvas, which serve to anchor it to the ground on deployment thereof (fig. 11.2). The canvasses are presented in a folded and rolled format over a portable structure with a rotating shaft that serves for the transport, rolling and unrolling thereof (fig. 11.1). The canvasses are accompanied by aluminium posts with a lower steel spike (fig. 11.4) and a metal chain inserted in its upper end, which has a snap (fig. 11.5) for fixing the upper edge of the canvas, passing it through the rings and tightening it by means of the chain links.

## Claims

1. Multilayered fire-retardant canvasses for the control and extinction of forest fires and prescribed burning in forest or agricultural areas, **characterised in that** they are comprised of one or several metal sheets with reflective surfaces, as the main element to achieve the reflection of heat radiation and be impervious to hot gases, accompanied and protected against physical strain and very high temperatures by one or several layers of mineral fibre fabric or felt, mineral-based paper sheets and/or metal sheets, all the layers being joined together by means of mechanical joints, such as sewing with metal thread, stapling or riveting.

2. Multilayered fire-retardant canvasses, according to claim 1, **characterised in that** the reflective metal sheets and/or mineral-based paper sheets have sufficient folds or overlaps between lines or joining points to offset their lack of elasticity with respect to the mineral fabrics or felts and metal fabrics.

3. Multilayered fire-retardant canvasses, according to claim 1, **characterised in that** the use of thermostable adhesive substances in the joint between the layers only in an auxiliary manner to that of the mechanical joint, particularly to expedite the manufacturing process.

4. Multilayered fire-retardant canvasses, according to claim 1, **characterised in that** a reinforcing adhesive tape comprised of artificial mineral fibre fabric and thermostable adhesive is disposed on the reflective metal sheets and lines or joining points.

5. Multilayered fire-retardant canvasses, according to claim 1, **characterised in that** the reflective metal sheets are reinforced by artificial mineral fibres embedded in their interior at the time of manufacture.

6. Multilayered fire-retardant canvasses, according to claim 1, **characterised in that** they have artificial mineral fibre layers which have undergone special treatment, such as mineralization, caramelisation or aluminium spraying, which improves their properties with respect to fire and handling.

7. Multilayered fire-retardant canvasses, according to claim 1, **characterised in that** the artificial mineral fibre fabric threads are reinforced with metal thread.

8. Multilayered fire-retardant canvasses, according to claim 1, **characterised in that** a braided steel wire cable is disposed along the outer perimeter fold of the layers.

9. Multilayered fire-retardant canvasses, according to claim 1, **characterised in that** metal rings inserted in buttonholes sewn with metal thread or similar elements that allow their anchorage are disposed along the outer fold of the layers.

10. Multilayered fire-retardant canvasses, according to claims 1 and 9, **characterised in that** metal stakes joined to the rings or similar are disposed on the lower edge thereof for their anchorage to the ground.

11. Multilayered fire-retardant canvasses, according to claims 1 and 9, **characterised in that** they are fixed by their upper edge and through the rings or similar to metal or artificial mineral fibre posts, with a metal spike for driving into the ground, by means of a chain with a snap or end hook which allows the tightening thereof using the links of said chain.

12. Multilayered fire-retardant canvasses, according to claims 1 and 9, **characterised in that** they are fixed by their upper edge and through the rings or similar to a cable previously disposed on posts or other elements of the site by means of metal rings or snaps.

13. Multilayered fire-retardant canvasses, according to claims 1 and 9, **characterised in that** they are fixed, through the rings or similar, to elements of the site by means of a chain with two hooks or snaps on the ends, in such a manner that they allow the tightening thereof using the links of said chain.

14. Multilayered fire-retardant canvasses, according to claim 1,
**characterised in that** they are installed in a portable manner onsite by unrolling from a structure with a rotating shaft around which they are rolled, folded lengthwise or not, and which allows the transport and storage thereof.

15. Multilayered fire-retardant canvasses, according to claim 1, **characterised in that** they have wind pressure dissipaters consisting of orifices that direct the wind towards a vertical sleeve with a downward outflow.

16. Multilayered fire-retardant canvasses, according to claim 1, **characterised in that** they are permanently or temporarily installed on total or partially collapsible posts.

17. Multilayered fire-retardant canvasses, according to claims 1 and 9, **characterised in that** they are deployed from fixed stations or cabinets, with a storage function, by means of cables or guides with the help of rings, snaps or guiding elements.

18. Multilayered fire-retardant canvasses, according to claim 1, **characterised in that** they are used for the containment of rolling elements in flames, below the fire line in fires in sloping terrain.

19. Multilayered fire-retardant canvasses, according to claim 1, **characterised in that** the artificial mineral fibre fabric layers are impregnated with fire-retardant products with long-term effects.

20. Multilayered fire-retardant canvasses, according to 1, **characterised in that** they are used for the protection of persons and assets which are in danger of being reached by the fire, wrapping or rolling themselves in these and creating a survival or protection cell.

21. Multilayered fire-retardant canvasses, according to claim 1, **characterised in that** they are dyed with fireproof and even fluorescent substances, for the purpose of highlighting or camouflaging their presence.

22. Multilayered fire-retardant canvasses, according to claim 1, **characterised in that** they have metal or artificial mineral fibre posts, with metal spikes on the lower end for driving into the ground.

23. Multilayered fire-retardant canvasses, according to claim 1, **characterised in that** are supported by posts, preferably inserted in a permanent manner, comprised of artificial mineral fibre, with a diameter that decreases with height and sufficiently flexible to be partially thrown down by wind.

24. Multilayered fire-retardant canvasses, according to claim 1, **characterised in that** they are used as a line of support in firebreaks.
